# EUROPEAN PATENT APPLICATION

(11) **EP 1 475 728 A1**
(43) Date of publication of application: **10.11.2004**
(21) Application number: 02806864.1
(22) Date of filing: 05.12.2002
(51) Int. Cl.: G06F 17/60

(54) **METHOD FOR AN INTERACTIVE COMPUTERISED GAME**

(30) Priority: 15.02.2002 RU 2002103701
(71) Applicant: ZAKRYTOE AKTSIONERNOE OBSCHESTVO "USERLINE", Moscow, 117997 (RU)
(72) Inventor: ANOKHIN, Alexandr Shugruevich, Moskovskaya obl., 141300 (RU)
(74) Representative: Exell, Jonathan Mark
(86) International application number: PCT/RU2002/000521
(87) International publication number: WO 2003/071463

(57) **Abstract**

This invention relates to computer games and advertising technologies. Its technical result is the increase in advertising value and the commercial attractiveness of any computer game.

A player (user) moves between the sites of sponsors (advertising accounts) which form his/her trajectory of virtual movement- (track) via the mechanism of jumpers.

Every track represents a game tour with a limited prize and number of sponsor sites, which is usually small. Every player has to register by filling in a questionnaire in order to join the game.

Any player is able to play on many game tours simultaneously and/or to switch between them, organizing the game play in the best possible way and competing with other players.

The player has the opportunity to access information about his/her own results and the results of other players in real time.

The necessity to visit a large number of sites in order to win the prize increases the commercial value of advertising, as it is placed on every site. The prize is awarded by all the sponsors of all the participating sites, thus increasing the commercial attractiveness of the game for both players and advertisers

## Description

### FIELD OF THE INVENTION

This invention relates to computer games and advertising technologies.

### BACKGROUND OF THE INVENTION

There exist a lot of computer games that download a portion of information (game file) from the Internet to the user's terminal. This portion usually contains the rules of the game and certain software applications which allow for taking part in the game, and its downloading is commonly called "entering the game site." The "Game site" means a file which has a unique address and thus can be distinguished among all the other sites. Other actions needed to start a game include the input of a password by the player via his/her terminal (login), selection of game after the identification of the player and game play itself, which can contain several levels (see US 5,263,723 A, 23.11.1993; WO 97/15361 A3; EP 120322A1; EP 03101984; GB 2,054,390A.

Customary practice consists of playing for certain bonuses (prizes) awarded by advertising accounts, which upload their promotional material to the user's terminal during the download of the game file and subsequently display it on the output device of the user's terminal (e.g. screen). Thus, by entering a game site the player perceives the advertising contained on the site.

Nonetheless, as every player enters one and the same site many times, and thus limits the flux of advertising perceived to the materials contained on this site, provided that the prize is limited by those who place their advertising on the site in question, the advertising value and commercial attractiveness of such a game seems to be low.

There is a known gaming system that performs the following actions: identification of player, selection of game, participation in the game, definition of results reached by every player, comparison of the results, and awarding of a prize to the best player by comparing the results of all the players (RU 95112888 A, 27.07.1995, G06F161:00).

But, as the game is available on one site only, its advertising value (demonstration of promotional materials) and commercial attractiveness (value of prize, whish is influenced by the number of advertising accounts) are limited.

### SUMMARY OF THE INVENTION

The invention's technical result is the increase in advertising value and commercial attractiveness of any computer game.

To do so, the structure of a standard game containing the following elements: identification of player, selection of game tour, participation in the game, definition of results obtained by every player on the game tour, comparison of the above-mentioned results, award of prize to the best player depending on results of comparison - *shall be modified.* The game play at one and the same game tour shall be organized as a consecutive upload of several different arrays of information (files) to the player's terminal (denoted by I₁, I₂...,I_{N}, where N is a natural integer and N > 2), all containing advertising and unique instructions that change from one loading to another. Depending on the instructions, the player has to send a signal to the terminal's input device (make a move). Let us call the set of files Iⱼ (1 <j < N) used in the game tour the *track* of this game tour. When a correct move is made, a file is uploaded to the player's terminal that is contained on the next site of this game tour's track. In other words, this is going to be one of the Iⱼ (1 < j < N) files. Selection of one or another site from the tour track is a random process with an operatable probability of the resulting selection. The player will be awarded a certain number of points for every correct move. In case of an incorrect move (i.e. a move that breaks the rules), the next file from the track will not be loaded, and thus the player does not receive any points. Though, in this case the player can continue game play on this tour.

The total number of points received by the player at the end of game tour is defined by the sum of points won by player by loading any of the above-mentioned files; I₁, I₂, ..., I_{N}, which makeup part of this given game tour.

We will call the information contained in every file of game tour that provides instructions for the next moves and automatically loads the next file from the next site of the game track if the answer is correct*,* a *jumper.*

The loading of a sequence of files, Iⱼ (1 < j < N), in conformity with the terminology used in this text is called sequential loading of selected sites (*surfing*). One must take into account that both the number of times every player enters the whole track of the game tour and the number of times all the players enter a certain site of the track are recorded. The former allows for determining individual results, and the latter guarantees a fixed number of exposures of advertising contained on every site of the track on the terminal output device (e.g. screen) of each player at the beginning of every tour.

The player has the possibility to access information about his/her own results and the results of other players in real time.

In case more than one game tour is run, the player can change tours anytime at his own will. If necessary, additional user identification can be added. Any player will be able to play on many game tours simultaneously and/or switch between them, organizing the game play in the best possible way and competing with other players.

### BRIEF DESCRIPTION OF THE DRAWING

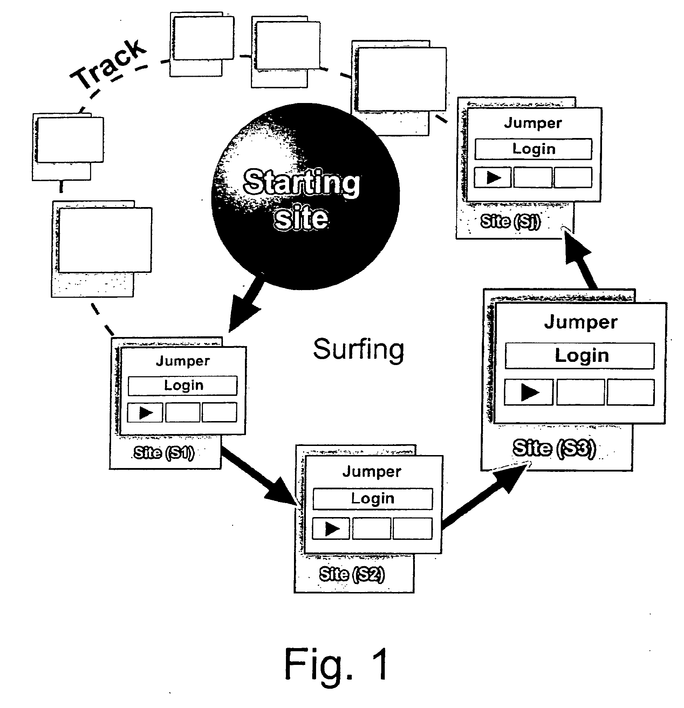

Henceforth, the invention shall be explained by means of Fig. 1.

The best way to implement the invention.

The terms used in the description should be understood as defined below.

File - a certain amount of information recorded on storage media that can be transmitted to users via communications facilities.

Address - a sequence of symbols that uniquely identifies the File.

Site - an ordered pair C = {A, F}, where A means the Address and F means the File.

Site Components - the site's Address and File.

Site space - a set whose elements are Sites, and any two Sites of site space necessarily have unique addresses.

Terminal - a device that has: a) an input device that can be used for the input of an address, login and other necessary information; b) the storage medium, where the file can be loaded; c) output device, which is used for displaying images or any other information determined by the loaded file; d) connection to a site space. When address A₀ is input into the terminal, it loads the file F₀ into the terminal's storage medium, which is a component of site S₀ = {A₀, F₀}. As the address A₀ is unique, due to the laws of site space, the file F₀ is determined identically; though, this file may not exist, in this case the terminal will not be loaded. The result of this action is the display of images or other information determined by the file F₀ on the terminal's output device.

Entering the site - the loading of a file that is a component part of the site into the terminal's storage medium.

Visiting the site - the state of the terminal when its storage medium contains the file, which is a component part of the site.

Surfing - consecutive entering into sites of certain site space.

Starting Site - the site that contains basic information about the game and is used for the registration of players.

Login - sequence of symbols that allows identification of every player.

Player's identification - entering of Starting Site by a player and assignment of a unique login for participation in the game, which is generated by his/her own query. The assigned login is used for participation in the game (game tour), which represents preliminary identification. The player's login is also verified every time the player in question enters the game site.

Player - a user to whom is assigned a unique login for participation in the game (game tour).

Jumper - the amount of information contained in the game site's file. The jumper contains instructions that can be changed during the next entering of the game site. These instructions tell the player which information he must input in the terminal via input device after entering the game site. The jumper may contain elements that make it possible to fulfill the instructions (e.g. graphic, sound or other images projected to the terminal's output device). If the player inputs correct information that corresponds to the instructions displayed, he/she is automatically re-directed to another site of the same track and receives a certain number of points. If the player inputs incorrect information that contradicts the instructions given, a message thereof is displayed and the player may proceed to the game. Fulfillment of instructions by the player may be connected with interpretation of graphic, sound or other images, which are generated at the output device of the terminal (e.g. screen) when the site is loaded into terminal's storage medium. These images may be hard to recognize by means of software applications.

Track - a fixed site space containing those sites that have the jumpers; during a game tour controlled surfing of players is performed within the framework of the track.

Move - the input of certain information via the input device of the terminal by the player in conformity with the instructions contained in the jumper. The correct moves provide entrance to the next site of the track and add a certain number of points to the player.

Game tour - game process during which both previously registered and spontaneously joining players perform controlled surfing along the track fixed before the beginning of the game. The amount of prizes and prize awarding conditions are established before the beginning of the game tour.

Site's number of visitors - the number of entries to site from the beginning of the game tour in question.

Surfing control during the game is performed based upon the following grounds listed below.

Selection of the site for entrance by a certain player during a certain game tour is a controlled variant. It is important that the probability of the entering of players to different sites of a given track is determined automatically and is based upon the number of visitors to every site recorded at that moment in time. Thus, a previously designed and controllable final number of visitors for all the sites of a given game tour is attained. This mechanism guarantees execution of responsibilities regarding the number of visitors promised to all the advertising accounts who invested their money in the tour in question. Every right move made by any player gives him some points. Within the framework of any given game tour, the adding of points is a controlled variant that depends on the totality of visits of all track sites by all players at a given moment in time. This variant can be described mathematically as a vector whose every component equals the number of visits of sponsor sites by a certain player from the beginning of the game tour up to that given moment of time.

The following conditions are satisfied:
- No player can win (end game) till the number of visits of all game tour sites reaches a certain previously designed value (numeric criterion for finish acceptance);
- Active players (namely, the most active players) quickly enter the group of leaders; changes in players' positions inside the group are aleatory and mostly depend on (1) the relative position of the player at a given moment in time and (2) the player's activity. By player's activity, we mean the number of entries to game tour sites per unit of time. This allows for the lagging behind of passive players and for competition among the active ones (which stimulates the player's activity and excitement).

Prizes and advertising.

Some prize zones can be declared for every game tour that correspond to a certain level of aggregate visits of track sites. By the time one of the prize zones is reached by one or more players, whose number depends on the rules of the given game tour, they are awarded intermediate prizes. The Grand Prize of the game tour is received by the first player who manages to accumulate the previously announced number of points.

As advertising (promotional materials) is placed on every site of the track, the player receives more advertising information than in case of one single site; moreover, the prize is awarded by a conglomerate of all advertising accounts that place their advertising on the track sites. The prize is awarded only when a certain, previously programmed level of visits to track sites is reached (mechanism of advertising accounts' investment protection).

It makes the game fair for both players and advertisers!

### INDUSTRIAL APPLICABILITY

This invention can be applied without age restrictions for spending leisure time, entertainment, advertising and education.

## Claims

1. This Method of Interactive Computer Game that allow the player to identify himself, select the game tour and the game, while the game mechanism is able to calculate and compare the number of points accumulated by each player within the framework of a given game tour and finally award the prize to the player having the maximum number of points **CHARACTERIZED** that, it differs from the conventional mechanism described above by the fact that the player can switch between game tours any time he/she pleases, and every game tour contains unique arrays of information I₁, I₂, ..., I_{N} (where N is a natural integer and N > 2), which in their turn contain advertising information and instructions for next moves, by making a right move, the player automatically triggers the loading of the next array of information Iⱼ (i <j < _{N}) participating in the given game tour to its terminal, the selection of Iⱼ is performed randomly, and the final number of points accumulated by every player during the given game tour is determined by adding the points recorded when loading all the information arrays I₁, I₂, ..., I_{N} pertinent to the game tour in question.
